# EUROPEAN PATENT APPLICATION

(11) **EP 1 369 305 A2**
(43) Date of publication of application: **10.12.2003**
(21) Application number: 03012424.2
(22) Date of filing: 30.05.2003
(51) Int. Cl.: B60R 16/02

(54) **Power management and distribution assembly mountable on a battery**

(30) Priority: 04.06.2002 US 161970
(71) Applicant: Alcoa Fujikura Ltd., Franklin, TN 37067 (US)
(72) Inventor: Marusak, Brain T., Allen Park, MI 48101 (US); Gutman, Robert F., Allen Park, MI 48101 (US); Migrin, Robert S., Allen Park, MI 48101 (US)
(74) Representative: Ebner von Eschenbach, Jennifer

(57) **Abstract**

A power management and distribution assembly for use with a battery. A housing is secured to a face of the battery and includes a first terminal engaging the negative battery terminal, and a second terminal engaging the positive battery terminal. An energy management subassembly is in operative communication with the negative terminal; a cut-off switch subassembly likewise being in operative communication with the positive terminal. Electrical components, such as fuses, relays and controllers, are arranged upon a circuit board mounted within the housing in electrical communication with both the energy management and cut-off switch subassemblies. A cover secures over an exposed face of the housing and an access door is defined in the cover and is openable to reveal the electrical components. Power feed output connectors and wire harness output connectors are associated with the energy management subassembly and are accessible from locations exterior the housing.

## Description

The present invention relates generally to battery power management and distribution devices. In particular, the present invention discloses a battery mounted power distributing junction box assembly combining energy management and power cutoff subassemblies, pluralities of output connectors for wire harnesses and the like, and provision for fuses and relays for circuit protection, all being incorporated into a housing capable of being secured directly to any face of the battery and connected to its positive and negative terminals.

Current vehicle battery power distribution and battery power management technology contemplates the provision of stand-alone modules at locations throughout a vehicle. Such modules are necessary for monitoring certain parameters of the battery including current flow, battery temperature and the like. It is also required that a battery cut-off switch be provided whicb can cut power to the battery in the event of an accident or when a sub-system of the battery requires repair.

It has further been determined that the provision of such power distribution centers in varied locations adds to both trouble shooting problems and downtime for vehicle repairs. Existing connections to battery power feed to the vehicle are also not of the "plug-in" variety, resulting in the requirement that an entire vehicle harness be replaced or, at the very least, spliced when repairs are required Existing power feed connections are also currently made through the use of a stud, ring terminal, and nut, these not being of the quick-disconnect variety.

Attempts have been made in the relevant art to centralize certain aspects of power distribution and management technology proximate the battery and a first example of this is set forth in U.S. Patent No. 5,882,213, issued to Witek et al., which teaches a junction box with a housing mounted directly to a battery. The junction box includes a plurality of electrical outlets for receiving the electrical output from a terminal connected to the battery and such that the junction box is attached to the battery through the terminal. The terminal and outputs are preferably mounted and supported directly on the battery, such as by the terminal being mounted to a battery post of the battery in order to secure the junction box.

Witek farther teaches a plurality of electucal outputs coupled to a printed circuit board for distribution of the electrical power. A second plurality of outputs direct the electrical power from the circuit board to the wiring harnesses for further distribution. The circuit board and at least a portion of the terminal are enclosed within a sealed housing, in turn secured closely and adjacently to the battery by the terminal and supported by the battery.

U.S. Patent No. 5,645,448, issued to Hill, teaches a bartery connecting module mountable to an automotive vehicle battery. The module provides electrical connection between a battery post, a cable leading to an alternator, one or more cables leading to vehicle electrical systems such as a fuse box and a starter motor, and a main fuse located inside the module and connecting the alternator cable with the other components. The battery connecting module protects the major engine compartment electrical connections from solid and liquid contaminants and locates the main fuse in a manner which protects the alternator cable from short circuit conditions. Two of the cables are connected to the module by cable terminals which extend downward and into close proximity with the vertical battery side walls, thereby adding to the security of the battery connecting module's mounting on the battery.

Finally, U.S. Patent No. 5,643,693, also issued to Hill, discloses another and similar variant of an electrical power distribution module mounted to a top surface of a battery. A battery terminal connector is in electrical contact with a battery terminal and a plurality of fuse receptacles. A bus bar electrically connects the battery terminal connector to the fuse receptacles lying in a substantially horizontal plane in close proximity to the battery top surface and in order to contribute to the overall low profile created by the device. Starter and alternator cables are disclosed as being connectible to the battery terminal connector and bus bar, respectively. A cover is attached to the power distribution module and has hinged sections which may be opened to provide access to the battery terminal connector and fuse receptacles.

The present invention is a battery mounted housing assembly combining energy management, power cutoff, pluralities of output connectors for power connector plugs, wire harnesses and the like, as well as the provision of fuses and relays for circuit protection. The housing is secured directly to any face of the battery (including sides, bottom or top) and the associated energy management and power switch cut-off subassemblies connected (according to a preferred application) to its negative and positive terminals, respectively. The present invention is again an improvement over the prior art in that it provides a more capable and sophisticated assembly for accomplishing power management (i.e., load control) and distribution of the battery power, as well as the localized ability to both manually trip and reset the battery power output, all of these features being incorporated into the housing.

A main cover is securable over an exposed face of the housing and further includes an access door defined therein for revealing the various fuse, relay and controller components incorporated into the assembly. Additional battery terminal covers are assembleable over the first and second terminals and, in cooperation with the main cover, substantially enclose and protect the housing assembly. An additional feature of the housing is the provision of an extending and planar base for the purpose of securing against an associated bottom surface of the battery and which, in combination with pedestal engaging portions extending from a top surface of the housing, fixedly secure the same to the face of the battery.

The energy management subassembly accomplishes functions such as emitting a diagnostic output signal representative of a measured condition of the battery and generating an overload signal in the event that the maximum operating parameters of the battery have been exceeded. The cut-off switch subassembly includes features such as tripping power from the battery in the instance of a signal received from the energy management module or, alternatively, from the deployment of such as a vehicle crash sensor, evidencing a collision. Both manual trip and reset buttons are positioned at exposed locations proximate and in communication with the cut-off switch subassembly.

A plurality of connector outputs are provided at selected locations ofthe housing and include among them power feed connectors in operative communication with the cut-off switch subassembly. Additional wire harness connectors are located along a Font face of the housing, the overlying main cover being configured with an outwardly flared opening at one location and in order to permit the associated and extending wire harnesses and input plugs to communicate with the connectors. An additional pair of connectors are associated with the energy management subassembly and include at least one input connector for receiving signals from remotely located accessories.
Fig. 1 is a perspective view of the housing incorporating the power management and distribution assembly according to the present invention, secured to the battery, and specifically illustrating the features of the main power output ports as well as the fuses, relays and controllers accessible through the main housing access door;
Fig. 2 is a sectional view of an exposed portion of the housing and illustrating the features of the power feed connectors, common bus bar and high current fuse elements according to the present invention;
Fig. 3 is a further enlarged sectional view in side profile of the illustration also shown in Fig. 2 and better illustrating the engaging pins associated with the power feed connectors according to the present invention;
Fig. 4 is another enlarged sectional view of a further exposed portion of the housing and illustrating a plurality of front housing male connectors and battery energy management module connectors according to the present invention;
Fig. 5 is a further rotated perspective of the affixed housing also shown in Fig. 1, and further illustrating in exploded fashion the main housing cover and positive and negative battery terminal covers according to the present invention;
Fig. 6 is a top sectional view of a stamped terminal, such as the terminal associated with the positive battery terminal and securing to an end of the housing corresponding to the placement of the battery cut off switch module according to the present invention;
Fig. 7 is an exploded view of a further variant of the present invention and incorporating an alternative terminal design associated with both the battery and power management and distribution assembly according to the present invention; and
Fig. 8 is an enlarged partial view illustrating a selected battery terminal according to the design of Fig. 7 with interengaging assembly terminal extending from the assembly of the present invention.

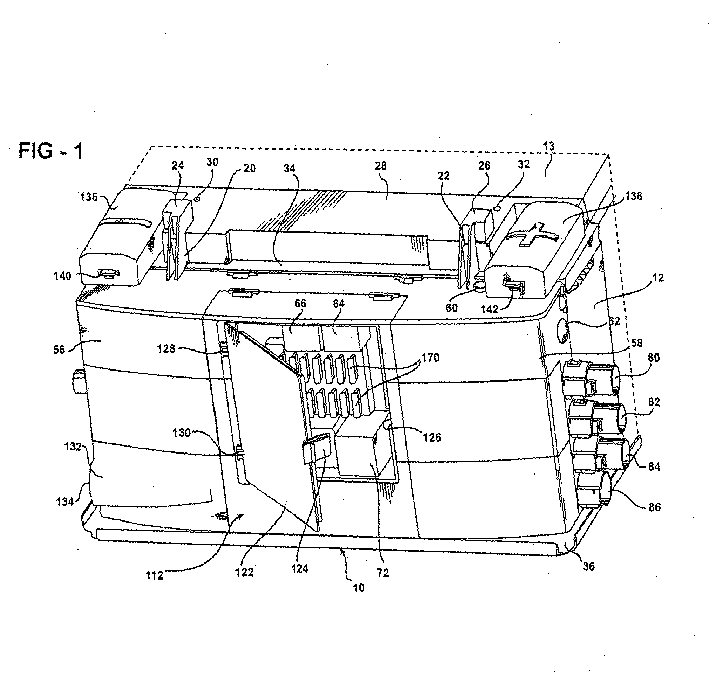

Referring now to Fig. 1, a power management and distribution assembly is illustrated at 10 according to a preferred embodiment of the present invention. The assembly 10 is configured as a three dimensional and substantially enclosed housing which is secured both mechanically and electrically to a battery 12.

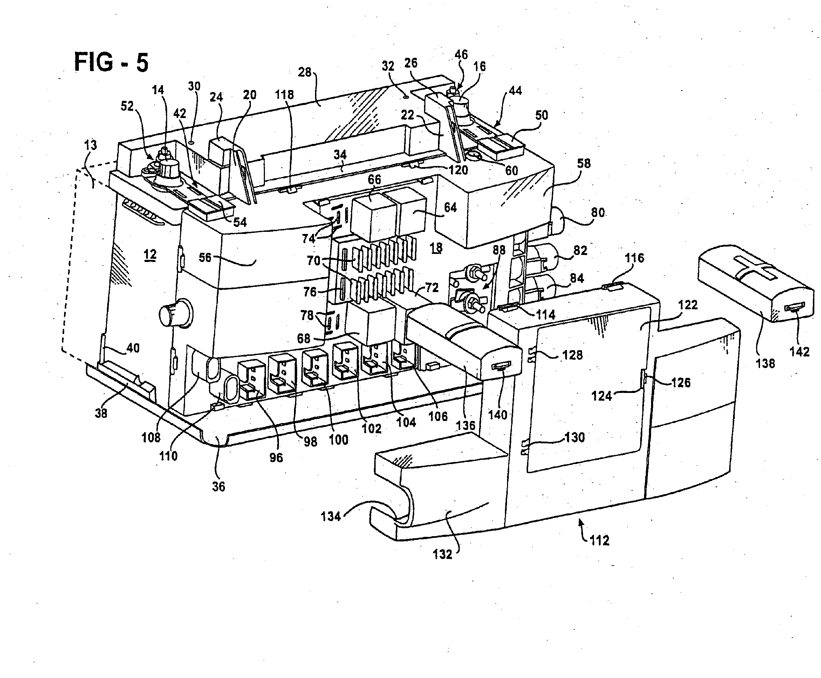

The battery 12, as is typically known in the art, exhibits a three dimensional and substantially rectangular configuration with top, bottom, front, rear and side faces. For sake of ease of illustration) the battery 12 is illustrated with a fairly narrow profile, however the phantom designations 13 indicated in Figs. 1 and 5 reference a more accurate configuration of most conventional batteries 12 and as their overall width. It is also understood that a particular construction or shape of a battery is not dictated by the present invention and that the assembly 10 is amenable for adapting to numerous different configurations of the battery 12.

The battery further includes a negative terminal 14 and a positive terminal 16. The assembly 10 is particularly suited for use with conventional battery designs rated for providing power commonly known as 12V DC output power, and is also clearly capable of interfacing to other battery designs of higher voltages. The higher voltage rating of the new battery design has been determined to be necessary to offset the additional power demands resulting from the increase in electrically related components incorporated within the vehicle architecture, however it is understood and appreciated that the power management and distribution assembly of the present invention is capable of being utilized with conventional batteries of any voltage rating.

Referring again to the illustrations, and in particular to Figs. 1 and 5, the assembly 10 is configured as a housing having a substantially planar shaped portion 18 having a given width, height, and depth and which corresponds generally to the dimensions of a selected face of the battery 12, such as a front face but also contemplating top, side or even bottom faces thereof, and against which the assembly 10 abuts. The planar shaped portion 18 (also known as a front housing) includes a pair of upwardly extending pedestal portions 20 and 22, extending from ends of which are angled and engaging tab portions 24 and 26, respectively.

The pedestal portions 20 and 22 and engaging tab portions 24 and 26, in combination, engage a substantially planar top portion 28 associated with the battery 12 In particular, the planar top portion 28 may consist of a separate portion of the overall housing 10 and which is secured to the corresponding top surface of the battery 12 by means of screws, fasteners or the like insertable through engagement holes 30 and 32. It is also contemplated that the top portion 28 may form a permanent part of the top battery surface or, alternatively, may be removed and the pedestal portions 20 and 22 reconfigured to engage a recessed top surface (see at 34 in Fig. 1) of the battery 12. Also, and the above said, it is also envisioned that a number of alternately configured attaching means may be employed for securing the assembly 10 to a selected face of the battery 12 within the scope of the present invention and beyond that disclosed herein.

Extending from a bottom corresponding location of the planar shaped portion 18 is a planar base 36 (see again Figs. 1 and 5 and which is otherwise known as a battery support bracket), which is configured to support a corresponding bottom surface of the battery 12. As best shown again in Fig. 5, upward side 38 and rear 40 projections may extend from specified locations of the planar base 36 and, in combination again with the configuration and location of the upper pedestal and engaging tab portions, secure the housing and assembly to the side face of the battery 12 in the manner indicated in the drawing illustrations. Additionally, and although not clearly shown, it is understood that the planar shaped portion 18 may include bosses on its bottom surface to serve as positioning aids when installing the housing assembly to the planar base 36.

Due further to the nature of the battery 12 being an energy source, and given present technology, the battery 12 being of substantial weight normally secures it against movement. Adequate means are normally taken to specifically locate, support and otherwise prevent movement of the battery. As such, the assembly 10 may also be positioned relative to an alignment means contained within battery support or retention and/or to features incorporated directly on the battery.

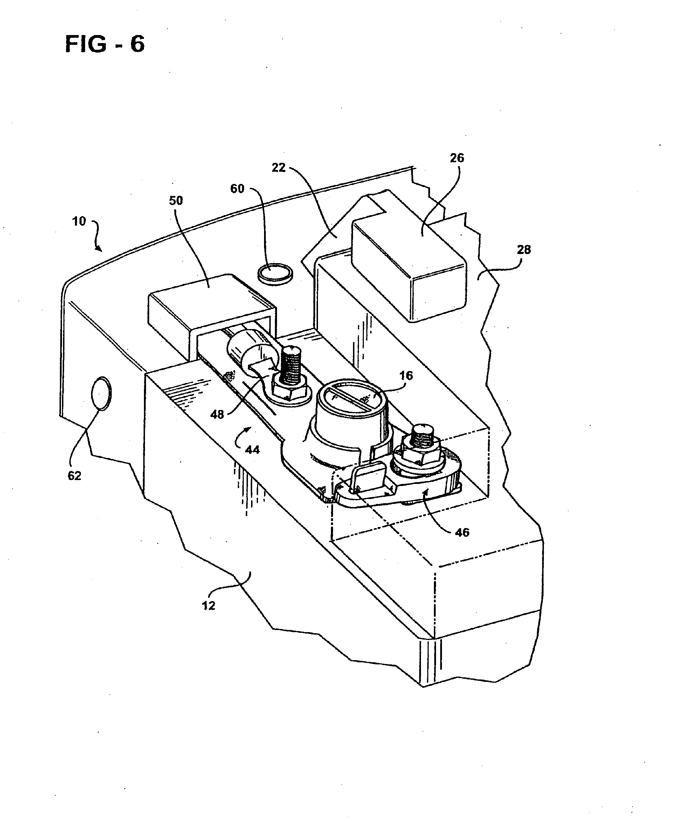

Referring again to Fig. 5, first 42 and second 44 terminals are illustrated which engage, respectively, with the negative 14 and positive 16 terminals of the battery 12. Each of the terminals 42 and 44 are constructed, in the preferred embodiment, of an elongated and stamped conductive alloy. Referring in particular to the enlarged view of Fig. 6, the terminal 44 is again illustrated in use with the positive terminal (see again post 16) of the battery 12.

Additional structural features such as a terminal draw-down/engagement assembly 46 is provided for securing and electrically communicating the terminal 44 with the battery terminal 16 as well as assisting in engaging the battery 12 to the assembly 10. Also included is a separate connector 48 extending from the elongated stamping portion of the terminal 44 and extending to an inlet 50 defined in a top surface of the assembly housing. The stamping portion of the terminal 44 also extends into the inlet 50 and communicates to components within the housing assembly as will be subsequently described. The first connector 42, as also shown in exposed fashion in Fig. 5, is constructed substantially identically to the enlarged illustration of the terminal 44 and again includes a draw-down/engagement assembly 52 and an inlet 54 for receiving the extending stamping portion of the terminal 44.

Referring again to Figs. 1 and 5, an energy management subassembly is illustrated at 56 and a cut-off switch subassembly at 58 at first and second locations upon the main housing portion 18 of the assembly. Each of the subassemblies 56 and 58 are affixable to the main housing portion 18 and such that the energy management subassembly (or module 56) is secured in proximate and electrically communicating fashion with the terminal 42 (negative battery terminal 14), whereas the resettable cut-off switch subassembly (or module 58) is likewise mounted in proximate and electrically communicating fashion with the terminal 44 (positive battery terminal 16). It is further understood that the terminal connections described above, while preferred, may be reversed and such that the energy management and cut-off switch subassemblies may communicate with the reversed battery terminals. It is further contemplated that the battery energy management subassembly may also incorporate directly the cut-off switch subassembly.

Referencing first the energy management subassembly 56, it includes many possible interface protocols such as a Communication Access Network (CAN) interface circuit and associated processing technology for measuring specific conditions of the battery 12 (such as again including but not limited to current flow, temperature, etc.). The energy management subassembly 56 is further capable of issuing an output signal illustrative of the measured condition of the battery 12 (such as to a dashboard display of the vehicle) or, alternatively or in addition, the energy management subassembly 56 can issue tripping/shut-off (overload) signal to the cut-off switch subassembly 58 to in turn disconnect the main battery 12 load or selected distributed loads in support of load management.

The battery cut-off switch module 58 is wired into the assembly 10 such that it accomplishes fast and effective disconnect of the battery power through the positive terminal 16 and in the event of a tripping/overload signal received from the energy management module 56. Alternately the cut-off switch module or subassembly 58 can trip the battery 12 in the event of a separate input signal from such as a circuit associated with a vehicle airbag (or again through the energy management module 56 is the same is calibrated to first detect an airbag inflation condition). Also included with the cut-off switch subassembly 58 is a first manual trip button 60 and a second reset button 62, each of which are located in proximate and electrically communicable locations with the cut-off switch subassembly 58. The trip 60 and reset 62 buttons permit a user to manually disengage and then subsequently reengage the battery 12 according to Original Equipment Manufacturers (OEM) guidelines and so that repairs such as those illustrated in OEM repair manuals (e.g. also including without limitation wire harness replacement and line splicing) may be accomplished.

Located at a substantially central area of the housing portion 18 are a plurality of electrical components, these securing to a circuit distributing means incorporated into the housing (i.e., such as stamped metal frets, conductors, PC boards, etc.) and which are referenced by relays 64 and 66, bi-stable relay 68 (which can switch/stay off or on), pluralities of fuses 70, and fuel pump controller 72. Although not clearly shown in the exploded illustration of Fig. 5, the circuit distributing means arrangement incorporated within the housing is accessible by the various electrical components such as through input apertures defined in a forward facing surface and corresponding to 74 (for relays such as 64 and 66), apertures 76 (corresponding to fuses 70) and apertures 78 (corresponding to such as the bi-stable relay 68). As is known in the art, the arrangement of the fuses, relays and controllers is necessary for ensuring the various functions of such as the energy management subassembly 56 and cut-off switch subassembly 58, as well as the various output connector functions as will be described.

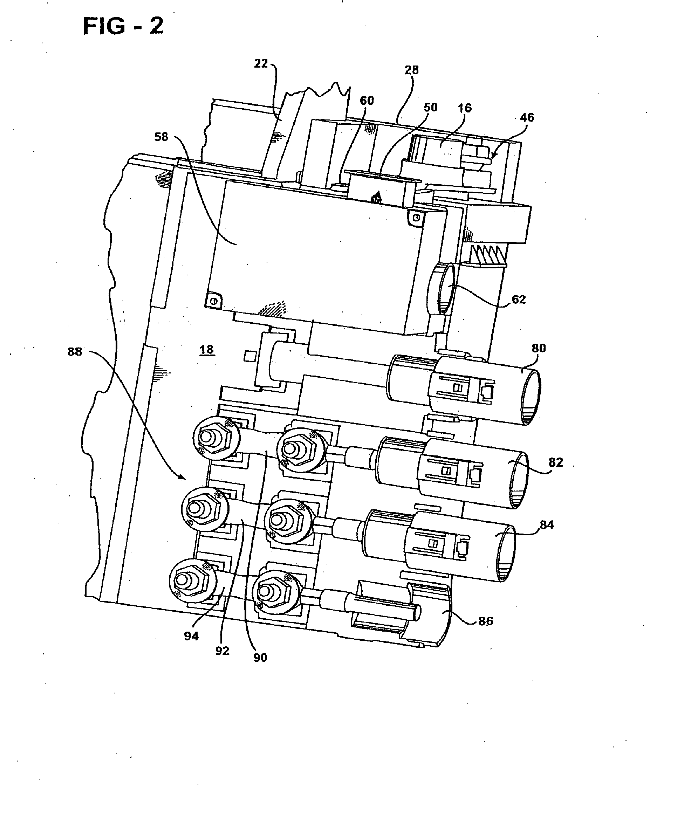

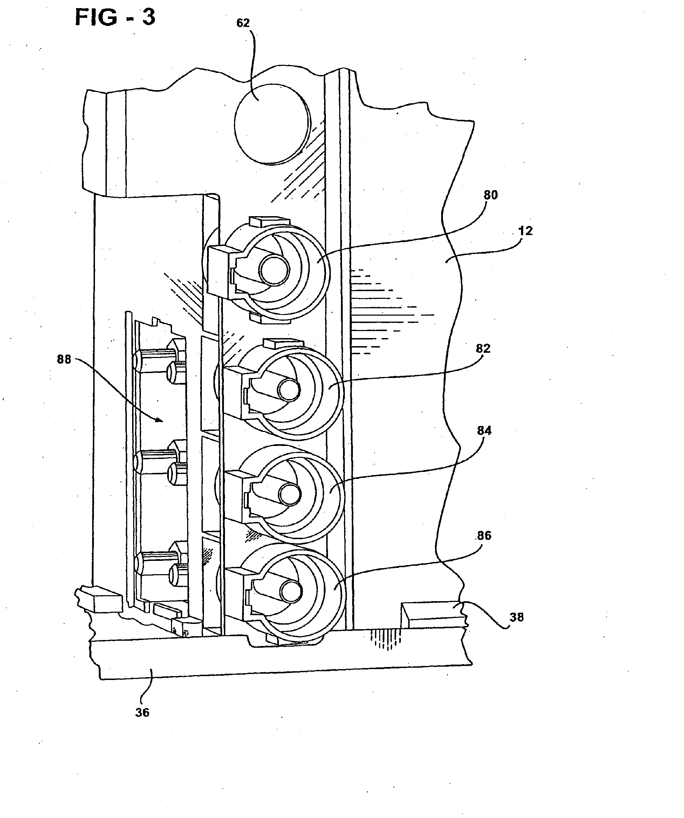

Referring again to Figs. 1 and 5, as well as to the sectional illustrations of Figs. 2 and 3, a first plurality of power feed output connectors are illustrated at 80, 82, 84 and 86 and which may or may not be in electrical communication with the cut-off switch subassembly 58 and typically extend from a proximate and sidewise manner from the housing assembly 10. The power feed connectors 80, 82, 84 and 86 are accessed by suitable and conventional input plugs (not shown) and a fuse arrangement is illustrated at 88, such as which includes a plurality of fuses interconnected by a common bus bar. The fuse arrangement 88 further includes a plurality of individual fuses (such as at 90, 92, and 94 in the enlarged sectional view of Fig. 2) and which are set according to a desired rating, such as in one variant at 150 Amps per fuse.

A further plurality of output connectors is illustrated by front mounted input/output connectors 96, 98, 100, 102, 104, 106, 108 and 110. The connectors 96-110 are electrically communicable with the input and output functions of the vehicle electrical system and are typically slaved to the relays 64, 66 and 68 and fuses 70 as well as the battery energy management subassembly 56. Although not shown, the connectors 96-110 are engaged by such as 8mm and 6mm power feeds extending from wire harnesses.

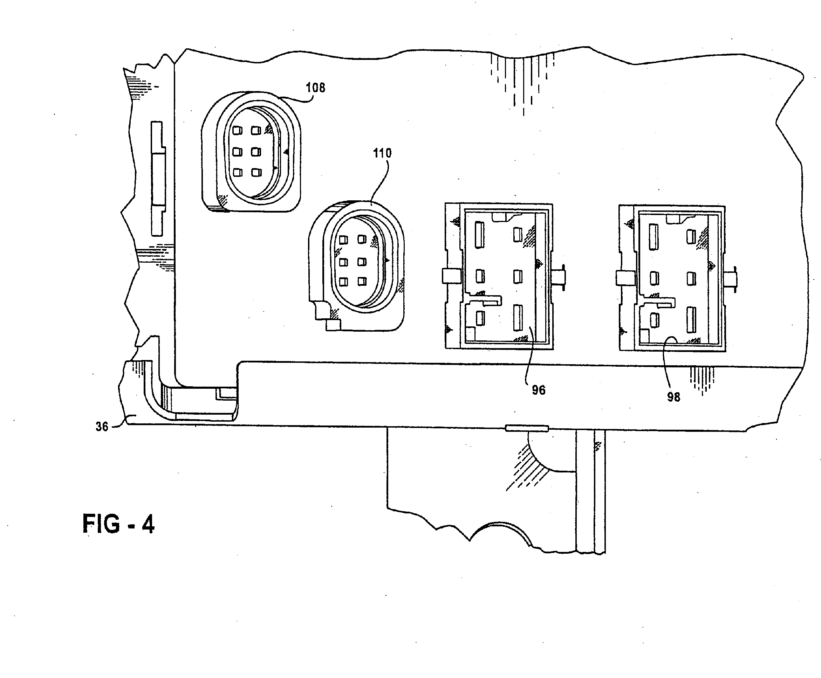

The enlarged sectional view of Fig. 4 illustrates the receptor pin arrangements of the connectors 96 and 98 and also shown in enlarged fashion are first 108 and second 110 connectors. The connectors 108 and 110 can receive corresponding input terminals (again not shown) associated with either input or output functions of the energy management subassembly 56.

Referring once again to Figs. 1 and 5, a main cover 112 is illustrated and which is securable over the front face of the housing portion 18. The cover 112 includes a unique configuration (as best shown in Fig. 5) which corresponds to the configuration of the housing portion 18 and accommodates the placement ofthe energy management 56 and switch cut-off 58 subassemblies. Interlocking tab receipt portions 114 and 116 are illustrated at a top edge location of the main cover 112 and which are engaged by corresponding tabbed portions 118 and 120 (see again Fig. 5) projecting from the corresponding upper edge of the main housing portion 18.

An access door 122 is defined at a generally centralized location of the main cover 112 and includes a latch 124 engageable with a corresponding location 126 in the main cover. Extending from an opposite side of the door 122 are a pair of hinge portions 128 and 130 such that, upon securing the main cover 112 over the housing, the access door 122 may be opened to reveal the various relays 64, 66 and 68, fuses 70 and controller 72. In this fashion, these elements may be more easily serviced or replaced.

A side extending location 132 of the main cover 112 is further outwardly flared so as to define a sideways extending opening 134 for receiving, in inserting fashion thereihrough, the associated wire harnesses (again not shown) corresponding to the I/O connectors 96-110. First 136 and second 138 battery terminal covers are provided and which, in cooperation with the main cover 112, secure over the associated stamped terminals 42 and 44 and corresponding battery posts (terminals) 14 and 16. Latch assemblies 140 and 142 are also illustrated along a corresponding side face of each of the battery terminals covers 136 and 138, respectively, and to secure the covers in place. Although not specifically shown in the exploded illustration of Fig. 5, it is understood that a fuse element access door is provided over the opening generally defined by the fuse arrangement 88 (150A fuses 90, 92, and 94) and in order to provide additional protection.

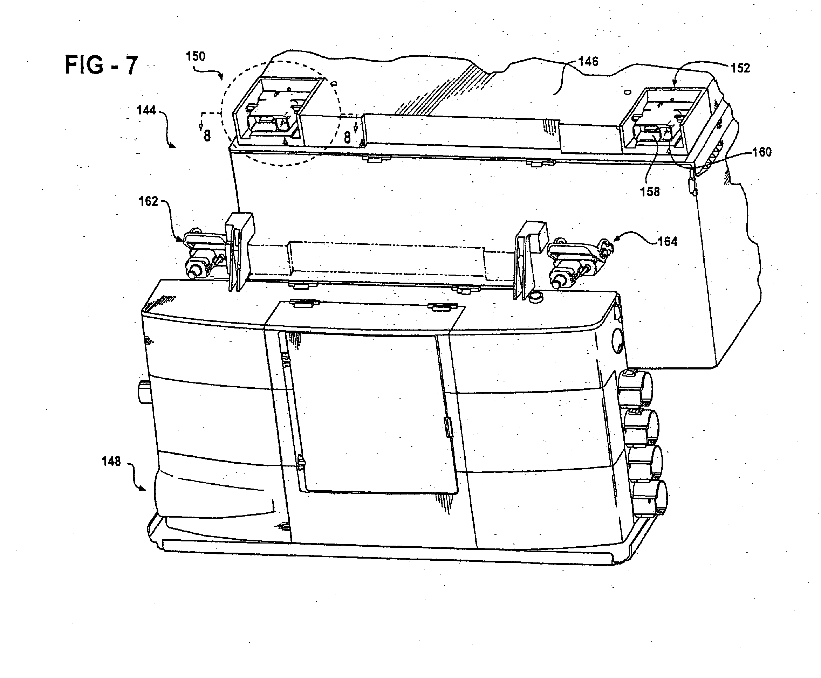

Referring to Fig. 7, an exploded view is illustrated at 144 of a further variant of the present invention and which incorporates an alternative terminal design associated with both a battery 146 and a power management and distribution assembly 148 according to the present invention. In particular, the modified battery design 146 includes, in substitution of the conventional terminal posts (see such as at 16 in Fig. 6), provision of first 150 and second 152 recessed terminals, and such as which correspond to negative and positive terminals of the battery (or the reverse thereof).

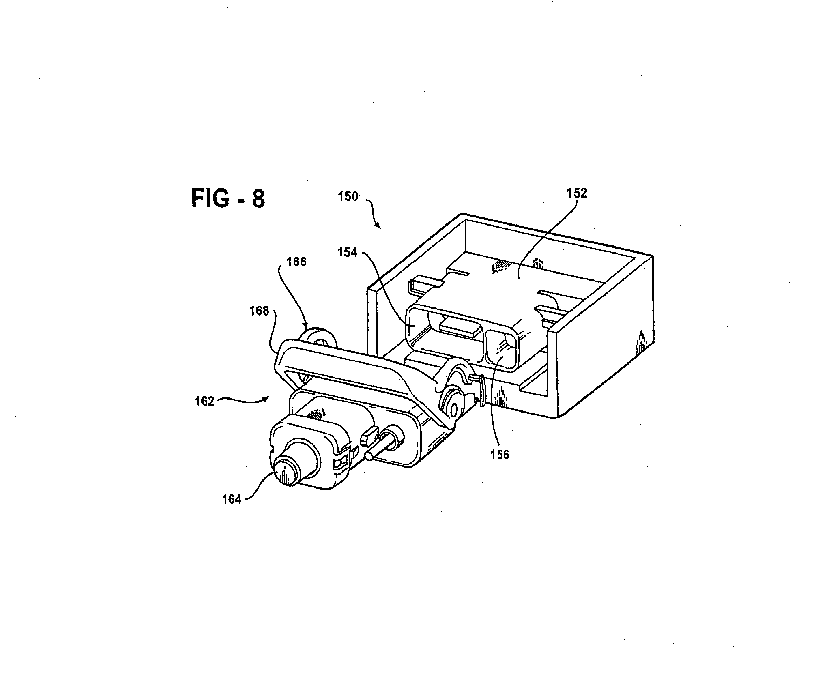

An enlarged partial ofthe first recessed battery terminal 150 is also illustrated in Fig. 8 and includes a recessed cavity 152 communicable with a front edge location of the battery 146. It is also envisioned that the recessed cavities associated with the terminals at 150 and 152 may be located in any facing direction of the battery and such as again further including the front, rear, sides, top and even bottom faces of the battery.

Terminal inputs, such as again referenced in enlarged fashion by selected terminal 150, include a first pin input 154 (such as again corresponding to either the negative or positive aspect of the associated battery terminal 150 or 152). Also included in the terminal input design is a second voltage sensor input pin, see at 156 for first terminal 150. The sensor input pin 156 is further known to incorporate a pass through loop inside of the battery so that, upon experiencing a disconnect condition, it causes the batteries potential load to drop out and to prevent inadvertent arcing during power shut-off and disconnect. Also included inside the voltage input sensor pin 156 is a veristor element, i.e., that part of the battery intelligence circuitry which assists in changing the resistance in relationship to changes such as in temperature, electrical load (current/voltage) and the like. While not as clearly shown in Fig. 7, the second terminal 152 also includes a first pin input 158 (again corresponding to a selected positive or negative terminal of the battery) and an identically constructed and functioning second voltage sensor input pin 160.

Referencing again Fig. 7, the modification 148 of the power management and distribution assembly further is constructed substantially as previously described in reference at 10 in the first disclosed embodiment, with the exception of its associated terminals (such as previously illustrated by example at 44) being substituted by terminals 162 and 164. Referring once again to the enlarged view of Fig. 8, the selected terminal 162 (typically corresponding to the negative battery terminal 150) includes a cord or line 164 (such as may further communicated to the battery energy management subassembly) A male insertion element 166 is also shown and includes a lever 168. Upon inserting extending pin portions (not shown) of the element 166 into the associated pin inputs 154 and 156 of the selected recessed terminal 150, the lever is rotated to lock the terminal 162 in place and in a substantially level/flush manner in reference to a top surface of the battery 146. It is also understood that, beyond the configuration of the battery terminals 150 and 152 and associated assembly terminals 162 and 164 illustrated in Figs. 7 and 8, other and additional configurations and designs for mating positive and negative inputs of the assembly to the associated inputs of the battery are contemplated within the ordinary skill of one in the art.

In view of the description above, it is evident that the present invention discloses a novel and unique power management and distribution assembly which incorporates numerous and varied stand-alone components into a single housing. The centralized assembly results in a reduction of costs by not requiring the various stand-alone devices and associated wiring extending to and from the remote devices and the battery. The further ability to integrate the energy management and cut-off switch subassemblies into the housing enables the devices to work together to monitor the battery power, update the automobile computer as to the status of battery power, and can be used to cut the battery power to the electrical system when deemed necessary by the processor technology interfacing with the system. Other future considerations include DC to DC converter integration to support the migration from 12V to 42V and higher load applications, as well as the provision of solid state load switching.

Having described the presently preferred embodiments, it is to be understood that the invention may be otherwise embodied within the scope of the appended claims.

## Claims

1. A mounted power distributing junction box assembly for use with a battery, the
battery having positive and negative terminals, said assembly comprising:
a three dimensional housing adapted to be secured to a face of the battery,
a first terminal extending from a location of said housing and engaging the negative battery terminal, a second terminal extending from a further location of said housing and engaging the positive battery terminal;
said housing including an energy management sub-assembly in operative communication with a first selected one of said battery terminals, a cut-off switch subassembly in operative communication with a second selected one of said battery terminals;
a plurality of electrical components arranged upon a circuit board mounted within said housing and in electrical communication with both said energy management sub-assembly and cut-off switch subassembly, and
at least one individual plurality of connector outputs associated with at least one of said energy management and cut-off switch subassemblies, said outputs being accessible from locations exterior said housing.

2. The assembly as described in claim 1, further comprising a main cover securable over a face of said housing, an access door defined in said main cover and revealing said electrical components.

3. The assembly as described in claim 3, further comprising first and second battery terminal covers assembleable over said first and second terminals.

4. The assembly as described in claim 1, said energy management module further comprising a Communication Access Network interface circuit and being capable of emitting a diagnostic output signal representative of a measured condition of the battery.

5. The assembly as described in claim 1, said cutoff switch subassembly incorporating logic circuitry for generating a power trip signal of said battery power upon receipt of an associated input signal

6. The assembly as described in claim 5, said input signal originating from an output signal of said energy management subassembly.

7. The assembly as described in claim 5, said input signal originating from an output signal issued by deployment of a vehicle crash sensor.

8. The assembly as described in claim 1, further comprising a manual trip button at a first exposed location proximate to and communicable with said cut-off switch subassembly.

9. The assembly as described in claim 8, further comprising a reset button at a second exposed location proximate to and communicable with said cut-off switch subassembly.

10. The assembly as described in claim 1, further comprising said plurality of electrical components being selected from the group consisting of fuses, relays, diodes, circuit breakers and controllers.

11. The assembly as described in claim 1, said connector outputs further comprising a plurality of power feed connectors in operative communication with said cut-off switch subassembly.

12. The assembly as described in claim 11, further comprising a plurality of rated fuse elements in electrical communication with said power feed connectors via a common bus connector.

13. The assembly as described in claim 1, further comprising a plurality of wire harness input and output pins engageable with selected ones of said connector outputs.

14. The assembly as described in claim 1, further comprising at least one connector input associated with said energy management subassembly.

15. The assembly as described in claim 1, said housing further comprising an extending and planar base for supporting a corresponding bottom surface of the battery.

16. The assembly as described in claim 15, said housing further comprising a pair of pedestal portions extending from a top surface of said housing and engaging a corresponding top surface of the battery.

17. A power management and distribution assembly for use with a battery, the battery exhibiting a substantially rectangular configuration with top, bottom, front, rear and side faces, the battery further having positive and negative terminals projecting from the top face, said assembly comprising:
a three dimensional and substantially rectangular shaped housing adapted to be secured a face of the battery,
a first terminal extending from a location of said housing and engaging the negative battery terminal, a second terminal extending from a further location of said housing and engaging the positive battery terminal;
said housing including an energy management sub-assembly in operative communication with said first terminal, a cut-off switch subassembly in operative communication with said second terminal;
a plurality of electrical components arranged upon a circuit board mounted within said housing and in electrical communication with both said energy management sub-assembly and cut-off switch subassembly;
a main cover securable over an exposed face of said housing, an access door defined in said cover openable to reveal said electrical components; and
a first plurality of power feed output connectors and a second plurality of wire harness output connectors, said connectors being accessible from locations exterior said housing.

18. A mounted power distributing junction box assembly for use with a battery, the battery having positive and negative terminals, said assembly comprising:
a three dimensional housing adapted to be secured to a face of the battery; a first terminal extending from a location of said housing and engaging the negative battery terminal, a second terminal extending from a further location of said housing and engaging the positive battery terminal;
the positive and negative terminals of the battery each further including a recessed cavity communicating with a selected edge of the battery, each of the battery terminals including a first input pin corresponding to a selected positive and negative of the battery, said battery terminals each further including a second voltage sensor pin;
said first and second housing terminals each further including a male insertion element corresponding to a configuration of said input and voltage sensor pins;
said housing including an energy management sub-assembly in operative communication with a first selected one of said battery terminals, a cut-off switch subassembly in operative communication with a second selected one of said battery terminals;
a plurality of electrical components arranged upon a circuit board mounted within said housing and in electrical communication with both said energy management sub-assembly and cut-off switch subassembly, and
at least one individual plurality of connector outputs associated with at least one of said energy management and cut-off switch subassemblies, said outputs being accessible from locations exterior said housing.
